Europäisches Patentamt

European Patent Office

Office européen des brevets

(19)

(11) EP 1 132 906 A2

(12) **EUROPEAN PATENT APPLICATION**

(43) Date of publication:
12.09.2001 Bulletin 2001/37

(51) Int Cl.7: **G11B 11/105**

(21) Application number: 01105884.9

(22) Date of filing: 09.03.2001

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **09.03.2000 JP 2000071017**

(71) Applicant: **SONY CORPORATION
Tokyo (JP)**

(72) Inventors:
• **Kobayashi, Seiji
Shinagawa-ku, Tokyo (JP)**
• **Horigome, Toshihiro
Shinagawa-ku, Tokyo (JP)**

(74) Representative: **Melzer, Wolfgang, Dipl.-Ing. et al
Patentanwälte
Mitscherlich & Partner,
Sonnenstrasse 33
80331 München (DE)**

(54) **Optical disk apparatus and optical disk**

(57)    Disclosed is an optical disk apparatus for recording copyright data onto an optical disk on which desired data is recorded by using pits or marks, comprising recording means for recording said copyright data onto said optical disk wherein said copyright data is recorded onto said optical disk in such a manner that a result of reception of returned light obtained by irradiating said optical disk with a laser beam represents substantially the same signal waveform as that of a multi-value modulation signal of said copyright data. With the configuration of the optical disk apparatus, it is possible to protect the interests of copyrighters much more effectively than a conventional method.

FIG.11

EP 1 132 906 A2

**Description**

BACKGROUND OF THE INVENTION

The present, invention relates to an optical disk apparatus and an optical disk, and is for example applicable to a MiniDisc (MD), a magneto-optical disk (MO) and the like, and recording and reproducing apparatus therefor.

MiniDisc apparatus, which are optical disk apparatus, have spread rapidly in recent years because the MiniDisc apparatus allow music to be copied readily from various contents without degrading sound quality of the music. Specifically, MiniDisc apparatus allow music information distributed on the Internet to be recorded on a MiniDisc and reproduced, or allow music on a compact disk borrowed from a friend or the like to be recorded on a MiniDisc and reproduced. In addition, MiniDisc apparatus allow music to be copied from another MiniDisc.

While such easy copying of music without degradation in sound quality greatly enhances the convenience of users, however, it may harm the interests of copyrighters who created the music. Therefore, groups and forums such for example as RIAA (Recording Industry Association of America), SDMI (Secure Digital Music Initiative), and CPTWG (Copy Protection Technical Working Group) study various techniques for the purpose of protecting the interests of copyrighters.

As one of such techniques, there is proposed a method in which music information is encrypted for recording by using copyright protecting information specific to a recording medium. Specifically, according to this method, when music information is copied onto another recording medium, the recording medium and the original recording medium have different copyright protecting information and therefore it is difficult to decrypt the music information. Thus, unlimited copying of music is prevented, thereby protecting the interests of copyrighters.

Proposed systems of recording such copyright protecting information include a method of providing a sector inaccessible to the user and recording copyright protecting information in the sector, a method of recording copyright protecting information by irreversibly changing an information-recording film (Japanese Patent Laid-Open No. Hei 9-91781), a method of recording copyright protecting information by using key information recorded in a lead-in area (International Publication WO 97/14147), and a method of recording information similar to this kind of information by partially removing a reflective film as against the recording of main data using a row of pits (International Publication wo 97/14144).

However, these methods have problems in that they are still practically insufficient to effectively protect the interests of copyrighters.

Specifically, although the method of recording copyright protecting information in a sector inaccessible to the user allows copyright protecting information to be recorded relatively easily, it has a problem in that because of the ease of recording, it is easy to copy the copyright protecting information. The method of recording copyright protecting information by irreversibly changing an information-recording film has a problem in that the information-recording film needs to have a special composition. The method of recording copyright protecting information by using key information recorded in a lead-in area has a problem in that the lead-in area itself may be copied by a simply modified reproducing apparatus. The method of recording information similar to copyright protecting information by partially removing a reflective film has a problem in that partial removal of the reflective film requires a special process and a special apparatus, and therefore it is difficult to incorporate the process and the apparatus into a reproducing apparatus. The method of partially removing a reflective film also has a problem in that the partially removed reflective film can be visually recognized, and therefore it is not possible to prevent creation of so-called pirated editions completely.

SUMMARY OF THE INVENTION

It is therefore an object of the present invention to provide an optical disk apparatus and an optical disk which are capable of protecting the interests of copyrighters much more effectively than a conventional method by recording copyright data in such a way that a result of reception of returned light obtained by laser beam irradiation represents a multi-value modulation signal of copyright data.

To achieve the above object, according to a first aspect of the invention, there is provided an optical disk apparatus for recording copyright data onto an optical disk on which desired data is recorded by using pits or marks, including recording means for recording the copyright data onto the optical disk, wherein the copyright data is recorded onto the optical disk in such a manner that a result of reception of returned light obtained by irradiating the optical disk with a laser beam represents substantially the same signal waveform as that of a multi-value modulation signal of the copyright data.

With the configuration of the first aspect, copyright data is recorded onto an optical disk in such a manner that a result of reception of returned light represents substantially the same signal waveform as that of a multi-value modulation signal of copyright data. Therefore, with an optical disk apparatus that reproduces data essentially by distinguishing the result of reception of returned light into two values, it is difficult to reproduce the recorded copyright data. Thus, it is possible to prevent copying by such an optical disk apparatus, and thereby effectively protect the interests of copyrighters.

According to a second aspect of the invention, there is provided an optical disk apparatus for reproducing desired data recorded on an optical disk by receiving returned light that is obtained by irradiating the optical disk with a laser beam, including decoding means for decoding the copyright data recorded on the optical disk, wherein each value of a multi-value signal is decoded on the basis of a result of reception of returned light, whereby copyright data recorded on the optical disk is decoded.

With the configuration of the second aspect, a result of reception of returned light is decoded by multi-value decoding means, whereby copyright data recorded on an optical disk is decoded. Therefore, it is possible to reliably reproduce the recorded copyright data which is difficult for an optical disk apparatus that reproduces data by distinguishing the result of reception of returned light into two values to reproduce. Thus, it is possible to control operation of optical disk apparatus according to a result of reproduced copyright data to eliminate illegal copies of MiniDiscs, and thereby it is possible to protect the interests of copyrighters effectively.

According to a third aspect of the invention, there is provided an optical disk wherein copyright data is recorded in such a manner that a result of reception of returned light represents substantially the same signal waveform as that of a multi-value modulation signal of copyright data.

With the configuration of the third aspect, copyright data is recorded in such a manner that a result of reception of returned light represents substantially the same signal waveform as that of a multi-value modulation signal of copyright data. Therefore, with an optical disk apparatus that reproduces data essentially by distinguishing the result of reception of returned light into two values, it is difficult to reproduce the recorded copyright data. Thus, it is possible to prevent copying by such an optical disk apparatus, and thereby effectively protect the interests of copyrighters.

The above and other objects, features and advantages of the present invention will become apparent from the following description and the appended claims, taken in conjunction with the accompanying drawings in which like parts or elements denoted by like reference symbols.

BRIEF DESCRIPTION OF THE DRAWINGS

Fig. 1 is a block diagram of a magneto-optical disk apparatus according to an embodiment of the present invention;
Fig. 2 is a block diagram of a multi-value modulation circuit in the magneto-optical disk apparatus of Fig. 1;
Fig. 3 is a connection diagram showing a level conversion circuit in the multi-value modulation circuit of Fig. 2;
Fig. 4 is a connection diagram showing a +45° phase shifting circuit in the multi-value modulation circuit of Fig. 2;
Fig. 5 is a connection diagram showing a -45° phase shifting circuit in the multi-value modulation circuit of Fig. 2;
Fig. 6 is a signal waveform diagram showing a modulation signal generated by the multi-value modulation circuit of Fig. 2;
Fig. 7 is a block diagram of a binary signal conversion circuit in the magneto-optical disk apparatus of Fig. 1;
Figs. 8A and 8B are signal waveform diagrams of assistance in explaining operation of the binary signal conversion circuit of Fig. 7;
Figs. 9A through 9E are time charts of assistance in explaining operation of the binary signal conversion circuit of Fig. 7;
Figs. 10A through 10D are schematic diagrams of assistance in explaining recording of copyright protecting information by the magneto-optical disk apparatus of Fig. 1;
Fig. 11 is a block diagram of a MiniDisc apparatus for playing back a MiniDisc in which copyright protecting information is recorded by the magneto-optical disk apparatus of Fig. 1;
Fig. 12 is a block diagram of a copyright protecting information decoding circuit in the MiniDisc apparatus of Fig. 11;
Fig. 13 is a block diagram of a reference signal generating circuit in the copyright protecting information decoding circuit of Fig. 12;
Fig. 14 is a characteristic curve diagram of assistance in explaining decoding of copyright protecting information in the MiniDisc apparatus of Fig. 11; and
Fig. 15 is a characteristic curve diagram of assistance in explaining decoding of copyright protecting information in the case of an illegal copy by comparison with Fig. 14.

DESCRIPTION OF THE PREFERRED EMBODIMENTS

Preferred embodiments of the present invention will hereinafter be described in detail with reference to the drawings as required.

(1) Configuration of embodiment

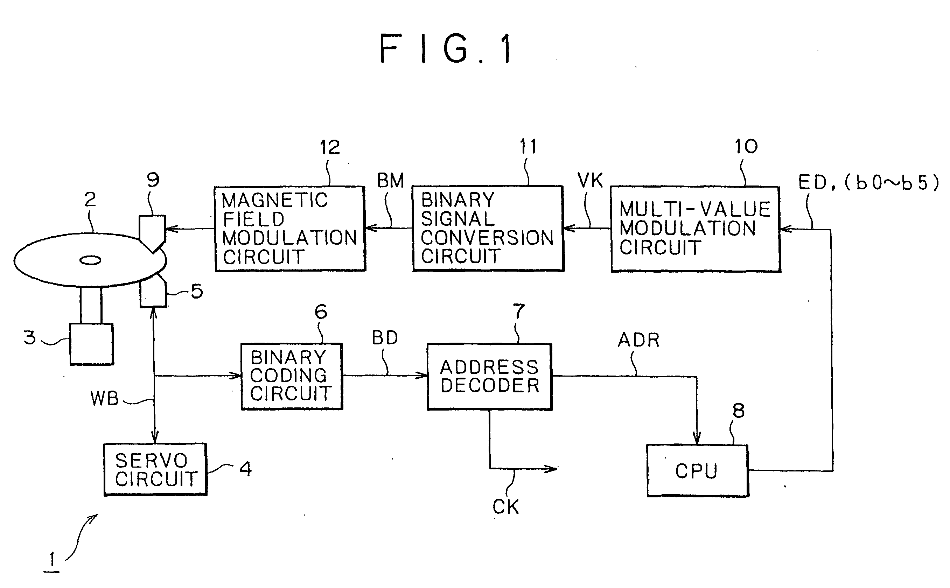

Fig. 1 is a block diagram of a magneto-optical disk apparatus according to an embodiment of the present invention. The magneto-optical disk apparatus 1 records copyright protecting information on a MiniDisc 2 before shipment from a factory or starting audio data recording at a specified store.

The MiniDisc 2 is a magneto-optical disk whose information recording surface is formed by a magneto-optical film. A laser beam guiding groove is formed on the information recording surface, thus enabling tracking control. The groove is formed in a wobbled line on the MiniDisc 2 by a wobble signal, which is a signal frequency-modulated by address data. Thus, spindle control can be effected according to the wobbled line of the groove, and also information on a point of laser beam irradiation can be obtained.

A spindle motor 3 in the magneto-optical disk apparatus 1 drives the MiniDisc 2 for rotation at a predetermined rotational speed under control of a servo circuit 4.

An optical pickup 5 is held by a specified sled mechanism so as to be able to move in a radial direction of the MiniDisc 2. The optical pickup 5 irradiates the MiniDisc 2 with a laser beam and receives the returned light, and thereby generates a wobble signal WB whose signal level changes according to the wobbled line of the groove, a tracking error signal whose signal level changes according to an amount of tracking error, and a focus error signal whose signal level changes according to an amount of focus error. In recording copyright protecting information, the optical pickup 5 intermittently raises the amount of light of the laser beam from that for reproduction to that for recording, and thus makes thermomagnetic recording of the copyright protecting information by a so-called pulse train method.

The servo circuit 4 effects tracking control and focus control of the optical pickup 5 by using the tracking error signal and the focus error signal, respectively. Also, the servo circuit 4 controls rotational speed of the spindle motor 3 in such a manner that a channel clock generated by the wobble signal WB has a predetermined frequency, and under control of a central processing unit (CPU) 8, allows the optical pickup 5 and a modulation coil 9 to seek a specified position.

A binary coding circuit 6 converts the wobble signal WB into binary code by comparing the wobble signal WB with a predetermined threshold level, and then outputs a binary-coded signal BD. An address decoder 7 receives the binary-coded signal BD at a PLL circuit not shown in the figure, whereby the address decoder 7 generates a channel clock CK using carrier frequency of the wobble signal WB as a reference, and outputs the channel clock CK to respective blocks directly or after frequency division. Also, the address decoder 7 decodes and outputs address information ADR on a point of laser beam irradiation by processing the binary-coded signal BD using a data clock obtained by frequency-dividing the channel clock CK as a reference.

The central processing unit 8 is a controller for controlling operation of the magneto-optical disk apparatus 1. The central processing unit 8 controls operation of the servo circuit 4 on the basis of the address information ADR outputted from the address decoder 7 to thereby retain the optical pickup 5 and the modulation coil 9 at a position for recording copyright protecting information. Also, the central processing unit 8 outputs copyright protecting information ED to a multi-value modulation circuit 10. Incidentally, as will be described later, the copyright protecting information ED is copyright information indicating the ownership of the copyright and the like, and is formed by 6-bit parallel data (b0 to b5).

The multi-value modulation circuit 10 generates a multi-value modulation signal VK from the copyright protecting information ED, and outputs the multi-value modulation signal VK. A binary signal conversion circuit 11 converts the multi-value modulation signal VK into a binary modulation signal BM for output in such a manner that a reproduced signal obtained by the optical pickup in reproduction represents substantially the same signal waveform as that of the multi-value modulation signal VK. A magnetic field modulation circuit 12 drives the modulation coil 9 in response to the binary modulation signal BM to thereby apply a modulation magnetic field to a point of laser beam irradiation by the optical pickup 5. Thus, the magneto-optical disk apparatus 1 makes thermomagnetic recording of the copyright protecting information ED at a specified region of the MiniDisc 2 by the pulse train method so that the multi-value modulation signal VK can be reproduced in a reproduced signal.

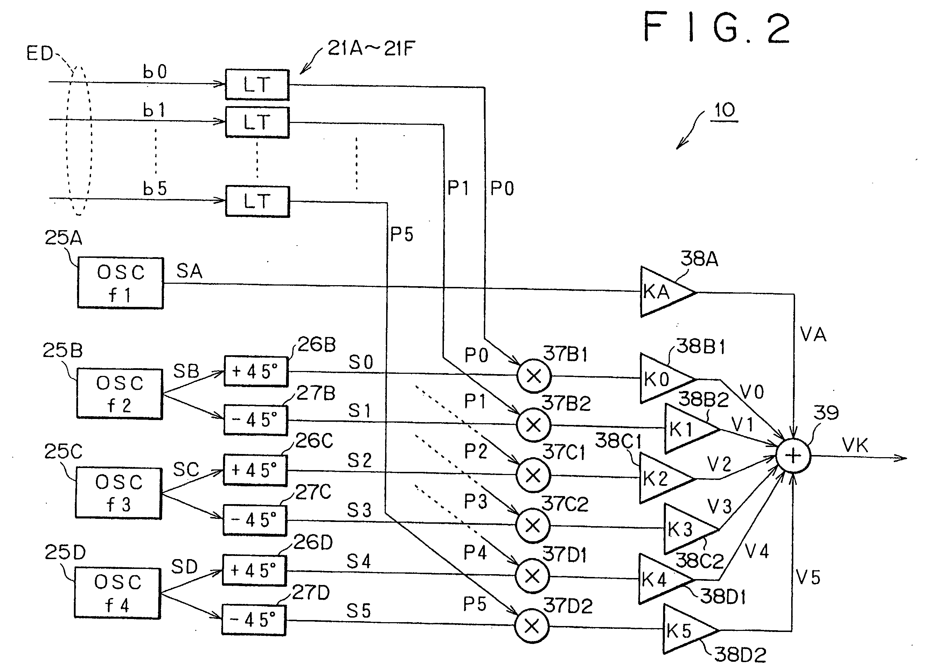

Fig. 2 is a configuration block diagram of the multi-value modulation circuit 10. Level conversion circuits (LT) 21A to 21F in the multi-value modulation circuit 10 are each formed in the same manner by an adding circuit, an amplitude adjusting circuit and the like. The level conversion circuits 21A to 21F receive bits b0 to b5 of copyright protecting information ED, respectively, and correct signal levels of the bits b0 to b5 that rise from a zero level to a predetermined signal level in such a way that the signal levels change with the zero level as their middle point. Thus, the level conversion circuits 21A to 21F generate and output polarity signals P0 to P5 whose polarities change according to logical values of the bits b0 to b5.

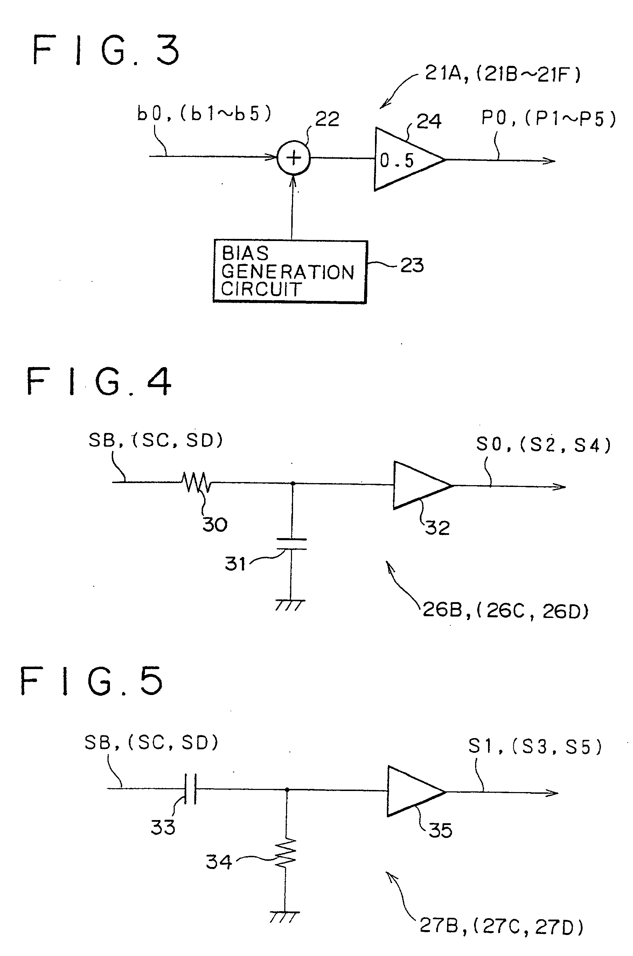

Specifically, as shown in Fig. 3, the level conversion circuits 21A to 21F input one bit b0 of the copyright protecting information ED, which is inputted by means of a TTL (Transistor Transistor Logic) level (a binary signal changing in a range of about 0[V] to +4[V]), to an adding circuit 22, where an output signal from a bias generating circuit 23 is added to the bit b0. The bias generating circuit 23 generates and outputs a direct-current bias voltage of -Vsp/2, which is a negative voltage having 1/2 of amplitude Vsp of the TTL level. Then, the adding circuit 22 corrects the signal level of the bit b0 for output in such a way that the signal level changes with the zero level as its middle point.

An amplitude adjusting circuit 24 is an amplifier circuit having an amplification factor of about 0.5, and outputs a signal having substantially 1/2 of amplitude of the output signal of the adding circuit 22. Thus, the level conversion circuits 21A to 21F output the six polarity signals P0 to P5 that correspond to the bits b0 to b5 of copyright protecting information ED and whose signal levels change in a range of -1 [V] to 1 [V] with 0 [V] as their middle value.

In Fig. 2, reference signal generating circuits (OSC) 25A to 25D output sine-wave signals SA, SB, SC, and SD having frequencies f1, f2, f3, and f4, respectively, as reference signals. The frequencies f1, f2, f3, and f4 are set in such a manner that the frequencies f2, f3, and f4 are twice, three times, and four times higher than the lowest frequency f1, respectively. The reference signal generating circuits 25A to 25D create the reference signals SA, SB, SC, and SD by frequency-dividing the channel clock CK by 16, 8, 4, and 2, respectively, and thereby the reference signals SA, SB, SC, and SD are maintained in specified phase relation to each other.

Next, +45° phase shifting circuits (+45°) 26B, 26C, and 26D advance phases of the sine-wave signals SB to SD by 45°, respectively, for output. More specifically, as shown in Fig. 4, the +45° phase shifting circuits 26B, 26C, and 26D input the sine-wave signals SB to SD respectively to a low-pass filter formed by a resistance 30 and a capacitor 31. In the +45° phase shifting circuits 26B, 26C, and 26D, resistance R30 of the resistance 30 and capacitance C31 of the capacitor 31 are selected such that the following relational equation holds for frequency f of the sine-wave signals SB to SD, respectively, and thereby the sine-wave signals SB to SD advanced 45° in phase are outputted.

[Equation 1]

$$f = \frac{1}{2\pi \cdot R30 \cdot C31} \tag{1}$$

An amplifier circuit 32 amplifies the output signal of the low-pass filter by 3 [dB] for output, thereby correcting the level of the signal having the phase thus corrected. As a result of these processes, the +45° phase shifting circuits 26B, 26C, and 26D output sine-wave reference signals S0, S2, and S4 having a given amplitude, respectively.

In the meantime, -45° phase shifting circuits (-45°) 27B, 27C, and 27D delay the phases of the sine-wave signals SB to SD by 45°, respectively, for output. More specifically, as shown in Fig. 5, the -45° phase shifting circuits 27B, 27C, and 27D input the sine-wave signals SB to SD respectively to a high-pass filter formed by a resistance 34 and a capacitor 33. In the -45° phase shifting circuits 27B, 27C, and 27D, resistance R34 of the resistance 34 and capacitance C33 of the capacitor 33 are selected such that the following relational equation holds for frequency f of the sine-wave signals SB to SD, respectively, and thereby the sine-wave signals SB to SD delayed 45° in phase are outputted.

[Equation 2]

$$f = \frac{1}{2\pi \cdot R34 \cdot C33} \tag{2}$$

An amplifier circuit 35 amplifies the output signal of the high-pass filter by 3 [dB] for output, thereby correcting the level of the signal having the phase thus corrected. As a result of these processes, the -45 phase shifting circuits 27B, 27C, and 27D output cosine-wave reference signals S1, S3, and S5 having a given amplitude, respectively.

Thus, +45° phase shifting circuits 26B, 26C, and 26D and the -45° phase shifting circuits 27B, 27C, and 27D generate a plurality of orthogonal reference signals S0 to S5 having different frequencies set by multiplying fundamental frequency f1 of an output signal SA of the reference signal generating circuit 25A by integers, as shown in the following equations.

[Equation 3]

$$SA = A \cdot \sin(2\pi \cdot f1 \cdot t)$$

$$S0 = A \cdot \sin(2\pi \cdot 2 \cdot f1 \cdot t)$$

$$S1 = A \cdot \cos(2\pi \cdot 2 \cdot f1 \cdot t)$$

$$S2 = A \cdot \sin(2\pi \cdot 3 \cdot f1 \cdot t)$$

$$S3 = A \cdot \cos(2\pi \cdot 3 \cdot f1 \cdot t)$$

$$S4 = A \cdot \sin(2\pi \cdot 4 \cdot f1 \cdot t)$$

$$S5 = A \cdot \cos(2\pi \cdot 4 \cdot f1 \cdot t) \tag{3}$$

Multiplying circuits 37B1 to 37D2 (Fig. 2) multiply the reference signals S0 to S5 by the polarity signals P0 to P5 outputted from the level conversion circuits 21A to 21F, respectively, thereby amplitude-modulating the reference signals S0 to S5 by the corresponding polarity signals P0 to P5, respectively, for output.

Amplifier circuits 38A and 38B1 to 38D2 amplify and output the output signal of the reference signal generating circuit 25A and output signals of the multiplying circuits 37B1 to 37D2, respectively. Thus, when gains of the amplifier circuits 38A and 38B1 to 38D2 are set to be KA and K0 to K5, respectively, output signals VA and V0 to V5 of the amplifier circuits 38A and 38B1 to 38D2 are expressed as the following equations.

[Equation 4]

$$VA = KA \cdot A \cdot \sin(2\pi \cdot f1 \cdot t)$$

$$V0 = +KO \cdot A \cdot \sin(2\pi 2f1 \cdot t) \ ...b0 = "1"$$

$$V0 = -KO \cdot A \cdot \sin(2\pi 2f1 \cdot t) \ ...b0 = "0"$$

$$V1 = +K1 \cdot A \cdot \cos(2\pi 2f1 \cdot t) \ ...b1 = "1"$$

$$V1 = -K1 \cdot A \cdot \cos(2\pi 2f1 \cdot t) \ ...b1 = "0"$$

$$V2 = +K2 \cdot A \cdot \sin(2\pi 3f1 \cdot t) \ ...b2 = "1"$$

$$V2 = -K2 \cdot A \cdot \sin(2\pi 3f1 \cdot t) \ ...b2 = "0" \qquad (4)$$

[Equation 5]

$$V3 = +K3 \cdot A \cdot \cos(2 \pi 3f1 \cdot t) \ ...b3 = "1"$$

$$V3 = -K3 \cdot A \cdot \cos(2 \pi 3f1 \cdot t) \ ...b3 = "0"$$

$$V4 = +K4 \cdot A \cdot \sin(2 \pi 4f1 \cdot t) \ ...b4 = "1"$$

$$V4 = -K4 \cdot A \cdot \sin(2 \pi 4f1 \cdot t) \ ...b4 = "0"$$

$$V5 = +K5 \cdot A \cdot \cos(2 \pi 4f1 \cdot t) \ ...b5 = "1"$$

$$V5 = -K5 \cdot A \cdot \cos(2 \pi 4f1 \cdot t) \ ...b5 = "0" \qquad (5)$$

In playing back the optical disk, amplitude of the reproduced signal changes with frequency, since size of a light spot used for reproduction is limited, and in an optical system used in a common reproducing system, the amplitude of the reproduced signal decreases with increasing frequency. The gains KA and K0 to K5 of the amplifier circuits 38A and 38B1 to 38D2 are set in a relation expressed as the following equation so that in reproduction, the signal level of the reference signal VA becomes higher than those of the other modulation signals V0 to V5.

[Equation 6]

$$KA > K0, K1, K2, K3, K4, K5 \qquad (6)$$

Thus, the multi-value modulation circuit 10 generates the six modulation signals V0 to V5 whose amplitudes change according to the logical values of the bits b0 to b5 of the copyright protecting information ED and the reference signal VA serving as a reference in demodulating the modulation signals V0 to V5, in such a manner that the reference signal VA and the modulation signals V0 to V5 are in orthogonal relation to one another.

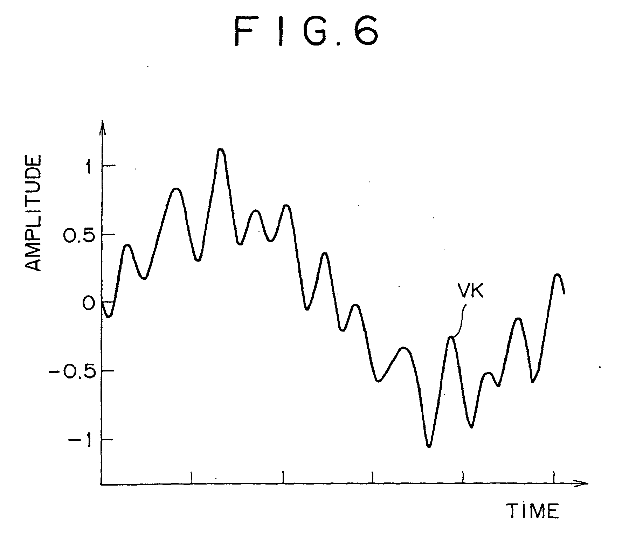

An adding circuit 39 adds the reference signal VA and the modulation signals V0 to V5, and outputs the result of the addition as a modulation signal VK. As a result of these processes, the multi-value modulation circuit 10 generates the multi-value modulation signal VK whose signal level changes according to the copyright protecting information ED so as to form sine waves, as shown in Fig. 6.

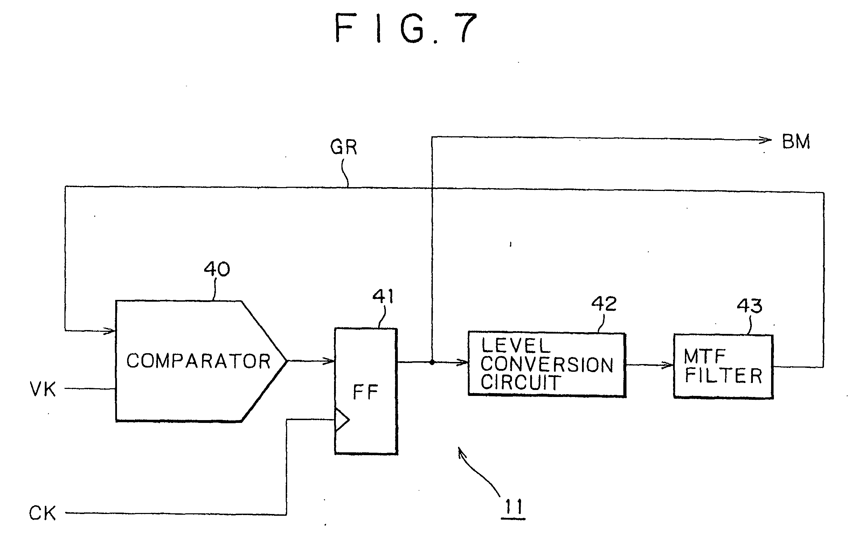

Fig. 7 is a block diagram of the binary signal conversion circuit 11. The binary signal conversion circuit 11 converts the modulation signal VK into a binary signal in such a manner that the signal level of a reproduced signal obtained in reproduction changes in substantially the same manner as that of the modulation signal VK. Specifically, in the binary signal conversion circuit 11, a comparator 40 compares the multi-value modulation signal VK with a pseudo-reproduction waveform signal GR outputted from an MTF filter 43, and then outputs the result of the comparison as a binary signal.

A flip-flop (FF) 41 sequentially latches the output signal of the comparator 40 by using the channel clock CK, and outputs the result of the latching as a binary modulation signal BM. A level conversion circuit 42 corrects the direct-current level of the modulation signal BM for output by a predetermined signal level so that the modulation signal BM that changes to signal levels corresponding to logical values 1 and 0 will vary with a zero level as its middle point.

The MTF filter 43 subjects the output signal of the level conversion circuit 42 to weighting addition, and then generates and outputs a pseudo-reproduction waveform signal GR. The MTF filter 43 is configured in such a manner that its tap count and weighting coefficient correspond to frequency characteristics (MTF) of the optical system of the reproducing system. Specifically, the magneto-optical disk reproducing system applies a laser beam having finite dimensions and a substantially Gaussian light amount distribution, then receives the returned light, and generates a reproduced signal from the result of reception of returned light. Thus, the MTF filter 43 subjects the modulation signal BM to weighting addition, and generates the pseudo-reproduction waveform signal GR substantially equivalent to the reproduced signal obtained in the reproducing system.

The comparator 40 in the binary signal conversion circuit 11 compares the multi-value modulation signal VK with the pseudo-reproduction waveform signal GR thus generated, and the flip-flop 41 sequentially latches the binary signal as the result of the comparison. Thus, the binary signal conversion circuit 11 generates the binary modulation signal BM by re-quantizing the multi-value modulation signal VK into single bits.

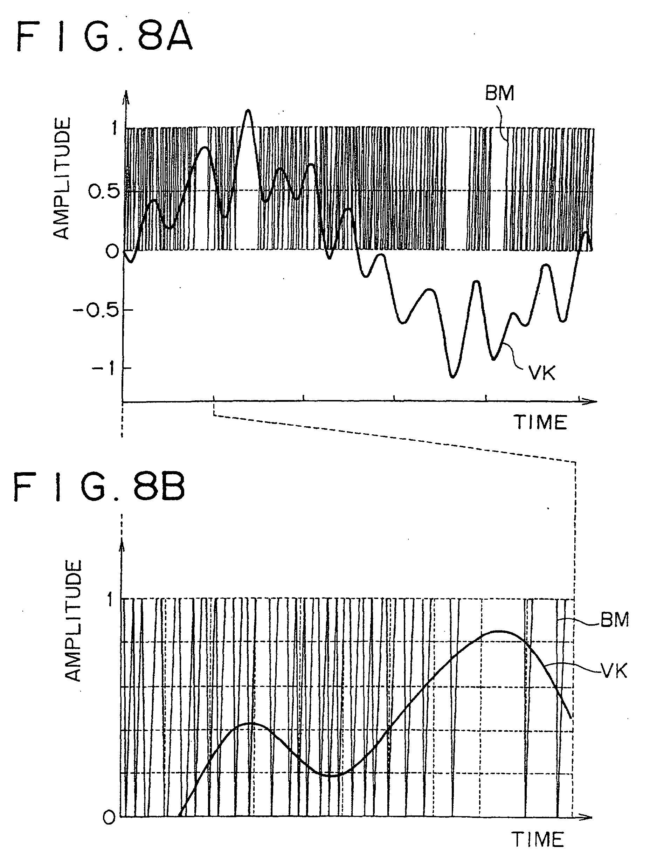

Figs. 8A and 8B are signal waveform diagrams showing a relation between the modulation signal BM and the multi-value modulation signal VK shown in Fig. 6. Reference to Fig. 8B, which shows this relation in enlarged dimension in a direction of the time axis, indicates that the logical level of the binary modulation signal BM changes in accordance with the signal level of the multi-value modulation signal VK.

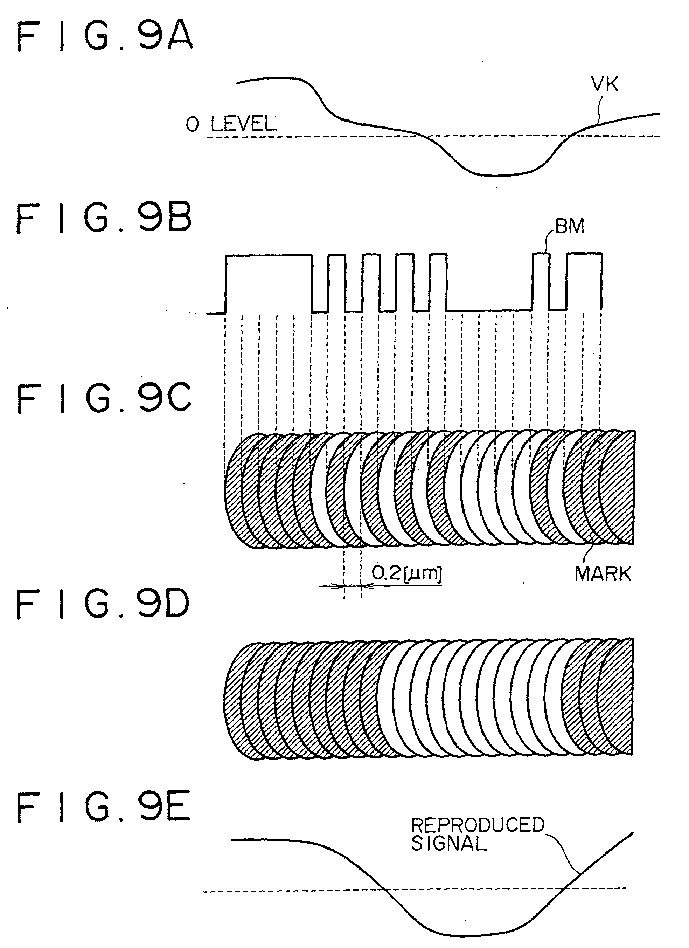

Figs. 9A through 9E show a relation between the foregoing relation and marks formed on a MiniDisc 2. The relation between the multi-value modulation signal VK and the modulation signal BM (Figs. 9A and 9B is used to magnetize a row of marks formed on the MiniDisc 2 (Fig. 9C) in such a manner that modulation coil 9 sides of the marks become north poles or south poles according to changes in the logical value of the modulation signal BM (in Fig. 9C, directions of the magnetization are indicated by presence and absence of hatching).

When the row of marks thus recorded is reproduced by a reproducing system that processes a reproduced signal into binary code, the row of marks is observed to be the same as a row of marks created by distinguishing the multi-value modulation signal VK into two values (Fig. 9D). Therefore, it is difficult for a normal MiniDisc apparatus to copy the row of marks created and recorded as described above. Incidentally, a signal reproduced from the row of marks of Fig. 9D is shown in Fig. 9E.

In order to stably retain the row of marks thus created on the MiniDisc 2, intervals between the marks need to be more than the minimum reverse interval. Accordingly, in the present embodiment, the frequency of the data clock CK generated by the wobbled line of the groove as described above is set such that the intervals between the marks become 0.2 [μm].

Also, as a precondition for reproducing the multi-value modulation signal VK via the optical system of the reproducing system by using the row of marks thus created, the weighting addition value for the binary modulation signal BM needs to represent the multi-value modulation signal VK, and the optical system of the reproducing system needs to provide characteristics for such weighting addition. In this case, as a minimum requirement, the interval between the marks needs to be smaller than the minimum resolution of the optical system (optical pickup) of the reproducing system.

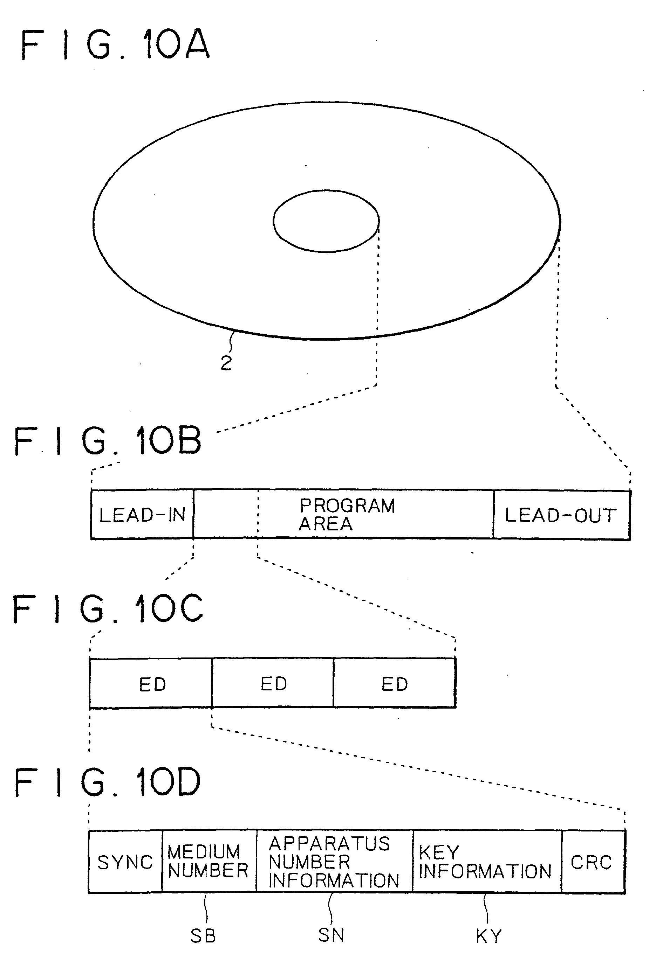

Figs. 10A through 10D show schematic diagrams of assistance in explaining the MiniDisc 2 thus created. The MiniDisc 2 is provided with a lead-in area at the innermost radius thereof, and a lead-out area at the outermost radius thereof, and a region between these areas is set to be a program area where user data is recorded (Figs. 10A and 10B). The central processing unit 8 in the magneto-optical disk apparatus 1 outputs copyright protecting information ED to the multi-value modulation circuit 10 in such a manner that the copyright protecting information ED is recorded three times at a first region of the program area at which the radius of the MiniDisc 2 becomes 23 [mm] or more (Fig. 10C). In addition, the central processing unit 8 disposes a synchronizing signal SYNC at the front of each of the repeated blocks, and then sequentially arranges a medium number SB, which is information for identifying the MiniDisc 2, apparatus number information SN indicating the apparatus number of the magneto-optical disk apparatus 1, key information KY for encrypting, and a cyclic redundancy check code (CRC).

The MiniDisc 2 of the present embodiment encrypts modulation data for EFM modulation by using the key information KY of the copyright protecting information ED thus recorded, and then records the data in the program area. Then the MiniDisc 2 is marketed through the same distribution system as compact disks.

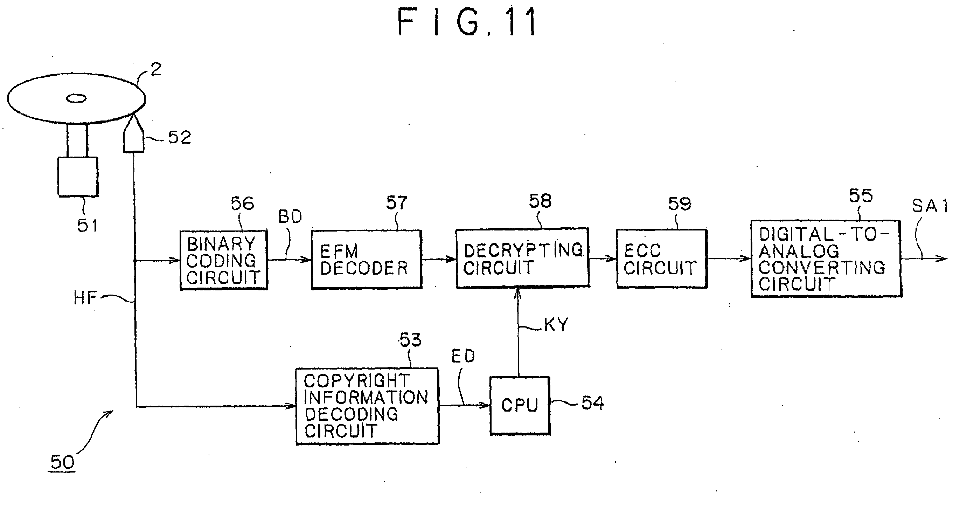

Fig. 11 is a block diagram of a MiniDisc apparatus for playing back a MiniDisc in which copyright protecting information is recorded in the above-described manner. Since a recording system of the MiniDisc apparatus 50 is configured in the same manner as a normal MiniDisc apparatus, and configurations of a servo circuit and the like of the MiniDisc apparatus 50 are the same as those of the magneto-optical disk apparatus 1 described with reference to Fig. 1, their repeated description will be omitted here.

A spindle motor 51 in the MiniDisc apparatus 50 drives the MiniDisc 2 for rotation at a predetermined rotational speed under control of a servo circuit not shown in the figure.

An optical pickup 52 is held by a specified sled mechanism so as to be able to move in a radial direction of the MiniDisc 2. The optical pickup 52 irradiates the MiniDisc 2 with a laser beam, then receives the returned light, and thereby generates a wobble signal, a tracking error signal, a focus error signal, and a reproduced signal HF resulting from magnetic Kerr effect whose signal level changes according to a row of marks of the MiniDisc. In recording an audio signal SA1, the optical pickup 52 intermittently raises the amount of light of the laser beam from that for reproduction to that for recording, and thus makes thermomagnetic recording of the audio signal by a so-called pulse train method.

A copyright information decoding circuit 53 reproduces copyright protecting information ED from the reproduced signal HF, and then outputs the copyright protecting information ED to a central processing unit 54.

A binary coding circuit 56 distinguishes the reproduced signal HF into two values, and outputs the result of the distinguishing operation BD. An EFM decoder 57 processes the result of the distinguishing operation BD by word synchronization, and then subjects the result BD to EFM (Eight to Fourteen Modulation) demodulation for output. A decrypting circuit 58 obtains key information KY of the copyright protecting information ED from the central processing unit 54, and decrypts output data of the EFM decoder 57 for output by using the key information KY. Incidentally, when a MiniDisc recorded on the MiniDisc apparatus 50 is played back, the decrypting circuit 58 stops operation and outputs output data of the EFM decoder 57 to an ECC circuit 59 as it is. The ECC circuit 59 subjects the output data of the decrypting circuit 58 to cyclic redundancy check by using a cyclic redundancy check character attached to the output data of the decrypting circuit 58, and then selectively outputs digital audio signals according to the result of the check. A digital-to-analog converter circuit 55 converts output digital data of the ECC circuit 59 to an analog signal, and outputs an audio signal SA1, which is the result of the conversion.

The central processing unit 54 is a controller for controlling the operation of the MiniDisc apparatus 50. When the MiniDisc 2 is loaded, the central processing unit 54 allows the optical pickup 52 to seek the lead-in area to obtain various information required for the processing of the MiniDisc 2. On the basis of this information, the central processing unit 54 controls the operation of the entire apparatus so that an audio signal is recorded in an empty region of the MiniDisc 2, and also controls the operation of the entire apparatus so that the audio signal recorded on the MiniDisc 2 is reproduced.

Next, in the case of the MiniDisc 2 in which data encrypting is performed and an audio signal is recorded, the central processing unit 54 allows the optical pickup 52 to seek the first region of the program area on the basis of the information obtained as described above, and then controls the operation of the entire apparatus so as to reproduce copyright protecting information ED. Then the central processing unit 54 obtains a result of detection at the first region by the copyright information decoding circuit 53, and in reproducing the audio signal, outputs key information KY detected from the result of the detection to the decrypting circuit 58.

Because of these processes, if a MiniDisc 2 produced by unauthorized copying and having no copyright protecting information ED recorded thereon is to be played back, for example, it is difficult to correctly reproduce the copyright protecting information ED, so that the central processing unit 54 obtains incorrect key information KY. Thus, the present embodiment makes it difficult to play back a MiniDisc produced by illegal copying, and thereby makes it possible to protect the interests of copyrighters.

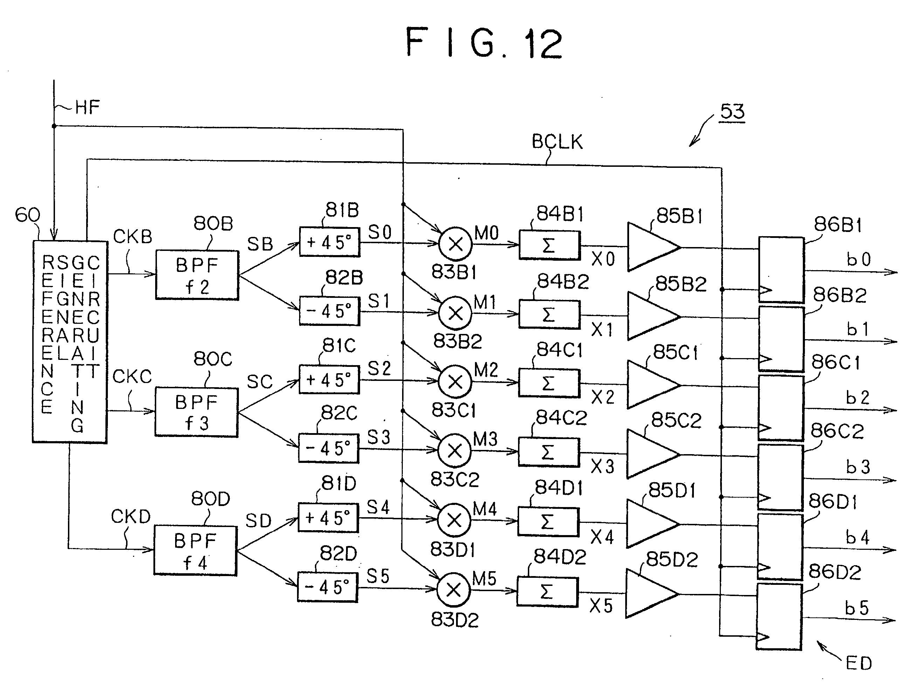

Fig. 12 is a block diagram of the copyright information decoding circuit 53. In the copyright information decoding circuit 53, a reference signal generating circuit 60 generates various reference signals CKA, CKB, CKC, and BCLK required for the decoding of copyright information from the reproduced signal HF.

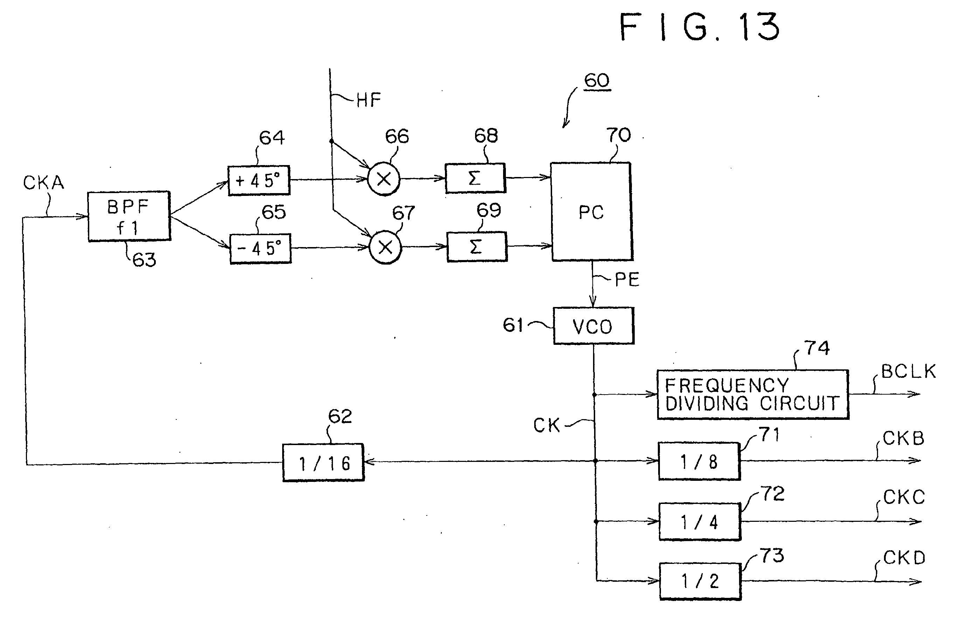

Specifically, as shown in Fig. 13, the reference signal generating circuit 60 outputs a channel clock CK by means of a voltage-controlled oscillator circuit (VCO) 61, then divides frequency of the channel clock CK by 16 by means of a frequency divider circuit (1/16) 62, and thereby generates a reference signal CKA having a frequency f1.

A band-pass filer (BPF) 63 extracts a fundamental frequency signal of the reference signal CKA by limiting the band of the reference signal CKA, thus generating a reference signal having a frequency f1. A +45° phase shifting circuit (+45°) 64 advances the phase of the reference signal outputted from the band-pass filter 63 by 45° for output, while a -45° phase shifting circuit (-45°) 65 delays the phase of the reference signal SA by 45° for output. Multiplying circuits 66 and 67 (Fig. 4) multiply output signals of the +45° phase shifting circuit 64 and the -45° phase shifting circuit 65 by the reproduced signal HF, respectively.

Integrating circuits (Σ) 68 and 69 integrate output signals of the multiplying circuits 66 and 67, respectively. A phase comparator circuit (PC) compares the phases of output signals of the integrating circuits 68 and 69 with each other, and outputs the result of the phase comparison as a control signal for controlling the voltage-controlled oscillator circuit 61.

As a result of the processes of the feedback loop, the reference signal generating circuit 60 generates the channel clock CK using the reproduced signal HF as a reference. The reference signal generating circuit 60 obtains integral values by multiplying the reproduced signal HF by a sine-wave signal and a cosine-wave signal each having the frequency f1 by means of the multiplying circuits 66 and 67 in the feedback loop. Then the reference signal generating circuit 60 generates the channel clock CK while applying a synchronous detection method so that the clock CKA is in phase with a sine-wave signal component of the frequency f1 included in the reproduced signal HF, that is, the clock CKA has the same frequency as that of the sine-wave signal SA generated in recording copyright protecting information ED (Fig. 2) and is maintained in a given phase relation to the sine-wave signal SA.

The reference signal generating circuit 60 generates the various reference signals CKA, CKB, CKC, and BCLK by dividing the frequency of the channel clock CK thus generated. Specifically, in the reference signal generating circuit 60, a frequency divider circuit (1/8) 71 divides the channel clock CK by 8 to thereby generate a first clock CKB, while a frequency divider circuit (1/4) 72 divides the channel clock CK by 4 to thereby generate a second clock CKC. A frequency divider circuit (1/2) 73 divides the channel clock CK by 2 to thereby generate a third clock CKD, while a frequency divider circuit (1/2) 74 divides the channel clock CK by a specified frequency dividing ratio to thereby generate a data transfer clock BCLK serving as a reference in transferring copyright protecting information ED.

Band-pass filters (BPF) 80B to 80D (Fig. 12) limit the bands of the clocks CKB to CKC for output, respectively, thereby suppressing harmonic components of the clocks CKB to CKC and reproducing the sine-wave signals SB to SD, respectively, that are generated in recording copyright protecting information ED.

Next, +45° phase shifting circuits (+45° ) 81B to 81D are formed in the same manner as the +45° phase shifting circuits 26B to 26D of the magneto-optical disk apparatus 1. The +45° phase shifting circuits (+45° ) 81B to 81D output reference signals S0, S2, and S4 generated by advancing the phases of the sine-wave signals SB to SD by 45° , respectively.

In the meantime, -45 phase shifting circuits (-45 ) 82B to 82D are formed in the same manner as the-45° phase shifting circuits (-45° ) 27B to 27D of the magneto-optical disk apparatus 1. The -45° phase shifting circuits (-45° ) 82B to 82D output reference signals S1, S3, and S5 generated by delaying the phases of the sine-wave signals SB to SD by 45° , respectively.

Thus, the +45° phase shifting circuits 81B to 81D and the -45° phase shifting circuits 82B to 82D generate a plurality of orthogonal reference signals S0 to S5 having different frequencies which signals are the same as those generated in recording copyright protecting information ED.

Multiplying circuits 83B1 to 83D2 multiply the reproduced signal HF by the reference signals S0 to S5, and output the results of the multiplication M0 to M5, respectively. Integrating circuits ($\Sigma$) 84B1 to 84D2 integrate the output signals M0 to M5 of the multiplying circuits 83B1 to 83D2 in a cycle of the data transfer clock BCLK.

Thus, in the present embodiment, a set of the orthogonal sine-wave signals whose frequencies are multiplied by integers form the reference signals S0 to S5. The reproduced signal HF is formed with the same signal waveform as that of the multi-value modulation signal VK generated by frequency-multiplexing modulation signals using the reference signals S0 to S5. Therefore, results of integration X0 to X5 change their values according to the logical levels of bits b0 to b5 to which the results of integration X0 to X5 correspond respectively, and do not change their signal levels according to the logical levels of the other bits b0 to b5 to which the results of integration X0 to X5 do not correspond.

Comparator circuits 85B1 to 85D2 compare the results of integration x0 to X5 with a predetermined threshold value, and thereby reproduce and output the signal levels of the bits b0 to b5 of the copyright protecting information ED. D flip-flops 86B1 to 86D latch the output signals of the comparator circuits 85B1 to 85D2 using the data transfer clock BCLK, and then reproduce and output the bits b0 to b5 of the copyright protecting information ED.

(2) Operation of embodiment

As described above with regard to the configuration of the present embodiment, a MiniDisc 2 is loaded into the magneto-optical disk apparatus 1 (Fig. 1) before recording music at a factory or the like, and copyright protecting information ED is repeatedly recorded at the first region of the program area (Figs. 10A through 10D). Since copyright protecting information ED is repeatedly recorded on the MiniDisc 2, it is possible to reliably reproduce the copyright protecting information ED even when a bit error that is difficult to correct occurs in part of the copyright protecting information ED due to a flaw in the MiniDisc 2, for example. A cyclic redundancy check character CRC attached to recorded copyright protecting information ED also makes it possible to reliably reproduce the copyright protecting information ED.

After copyright protecting information ED is thus recorded on the MiniDisc 2, an audio signal is encrypted by using key information KY set in the copyright protecting information ED, and then recorded at the next region of the program area. In the MiniDisc apparatus 50, the copyright protecting information ED on the MiniDisc 2 is reproduced in advance, and then the audio signal is decrypted by using the reproduced copyright protecting information ED, whereby the audio signal recorded in the program area is allowed to be reproduced.

The copyright protecting information ED on the MiniDisc 2 is formed by 6-bit parallel data. The magneto-optical disk apparatus 1 (Fig. 2) generates, in correspondence with the six bits, a reference sine-wave signal SA having a frequency f1 and three orthogonal sets of sine-wave signals S0, S2, and S4 and cosine-wave signals S1, S3, and S5 whose frequencies f2, f3, and f4 are twice, three times, and four times higher than the frequency f1 of the sine-wave signal SA, respectively. The sine-wave signals and cosine-wave signals S0 to S5 are amplitude-modulated by the bits b0 to b5 of the copyright protecting information ED, respectively, and are thereafter added to each other. Thus, modulation signals V0 to V5 generated by using the bits b0 to b5 of the copyright protecting information ED are frequency-multiplexed to generate a multi-value modulation signal VK.

The magneto-optical disk apparatus 1 (Fig. 7) re-quantizes the multi-value modulation signal VK into single bits in a short sampling cycle to thereby convert the multi-value modulation signal VK into a binary modulation signal BM (Figs. 8A and 8B). The magneto-optical disk apparatus 1 applies a modulation magnetic field using the binary modulation signal BM to a point irradiated with a laser beam, which intermittently rises to an amount of light for recording, whereby the copyright protecting information ED is recorded as a row of marks corresponding to the binary modulation signal BM.

Instead of quantizing the multi-value modulation signal VK into single bits by using a fixed threshold value, the magneto-optical disk apparatus 1 re-quantizes the multi-value modulation signal VK by using, as a reference, a pseudo-reproduction waveform signal GR obtained by filtering the binary modulation signal BM using frequency characteristics that correspond to characteristics of the optical system of the reproducing system.

Thus, the copyright protecting information ED is recorded such that the reproduced signal HF obtained in reproduction (Fig. 11) provides substantially the same signal waveform as that of the multi-value modulation signal VK (Figs. 9A through 9E). The copyright protecting information ED is recorded such that the reproduced signal HF provides substantially the same signal waveform as that of the multi-value modulation signal VK also because the sampling cycle of the re-quantization is set such that the minimum reverse interval of a magnetic field pattern on the MiniDisc 2 becomes smaller than the minimum resolution of the optical system in the foregoing reproduction. Thus, with the binary recording and reproducing system for the MiniDisc 2, it is possible to record and reproduce a multi-value modulation signal on the MiniDisc 2.

Specifically, the modulation signal BM whose logical value is reversed in such a short cycle forms a magnetized pattern on the MiniDisc 2. A reproduced signal HF is obtained in a state of intersymbol interference between consecutive marks having the short cycle, that is, the signal is obtained from a signal waveform resulting from the logical value of the binary modulation signal BM subjected to weighting addition corresponding to characteristics of the reproducing system. Thus, it is possible to reproduce a multi-value modulation signal VK.

The multi-value modulation signal VK is produced for the MiniDisc 2 by frequency-multiplexing modulation signals V0 to V5 obtained by using a plurality of orthogonal reference signals S0 to S5 (Fig. 2). Hence, the reference signals S0 to S5 for recording are demodulated, and then the reproduced signal HF is subjected to synchronous detection using the reference signals S0 to S5. Thus, it is possible to reliably reproduce copyright protecting information ED while effectively avoiding effects of the multiplexed modulation signals V0 to V5 and the sine-wave signal SA added to the modulation signals (Fig. 12).

The sine-wave signal SA that is not used for modulation is added to the modulation signals to produce the modulation signal VK (Fig. 2), and then the reference signals S0 to S5 are produced by the feedback loop that performs synchronous detection and phase comparison using the sine-wave signal SA as a reference. Thus, it is possible to reliably reproduce the reference signals S0 to S5 generated for recording and thereby reproduce the copyright protecting information ED.

The sine-wave signal SA serving as a reference in generating the reference signals S0 to S5 is set on the lowest frequency side, where the recording and reproducing system for the MiniDisc 2 has greater amplitude response. Also, the gain of the amplifier circuit 38A for amplifying the sine-wave signal SA is set greater than those of the other amplifier circuits 38B1 to 38D2. Thus, with the signal waveform of the reproduced signal HF, it is difficult to recognize small pulsations corresponding to the modulation signals V0 to V5 amplified by the other amplifier circuits 38B1 to 38D2, respectively. As in the case of a signal reproduced from a row of marks created when a usual audio signal is recorded, the reproduced signal HF is observed to pulsate with great amplitude. This makes it difficult to find such recorded multi-value copyright protecting information ED on the MiniDisc 2, thereby enabling prevention of illegal copying. In addition, since various data is recorded on the MiniDisc 2 by the thermomagnetic recording method, direct observation of an information-recorded surface of the MiniDisc 2 does not make it possible to find the recorded copyright protecting information ED in the form of a row of marks arranged at such short intervals. Thus, it is possible to effectively protect the interests of copyrighters.

When the MiniDisc 2 is played back, the signal component of the sine-wave signal SA serving as a reference in generating the reference signals S0 to S5 is observed to show a high signal level in the reproduced signal HF. Thus, it is possible to produce the reference signals SA and S0 to S5 with accuracy, and thereby reliably detect the copyright protecting information ED.

With an ordinary MiniDisc apparatus that processes the reproduced signal HF by distinguishing it into two values, it is difficult to detect the recorded row of marks formed at such short intervals. Therefore, when the modulation coil is driven for copying the MiniDisc by using reproduced data obtained by such a MiniDisc apparatus (data before decrypting and EFM demodulation), for example, it is difficult to copy the MiniDisc exactly as it is, whereby creation of pirated disks in which copyright protecting information ED is copied can be made difficult. In addition, the minimum magnetization reverse interval is set less than the resolution of the optical system in the reproducing system, and therefore, even if the recorded copyright protecting information ED in the form of a row of marks arranged at such short intervals is discovered, it is difficult to copy the row of marks of the copyright protecting information ED exactly as it is. This also makes it difficult to create pirated disks, and thereby makes it possible to protect the interests of copyrighters.

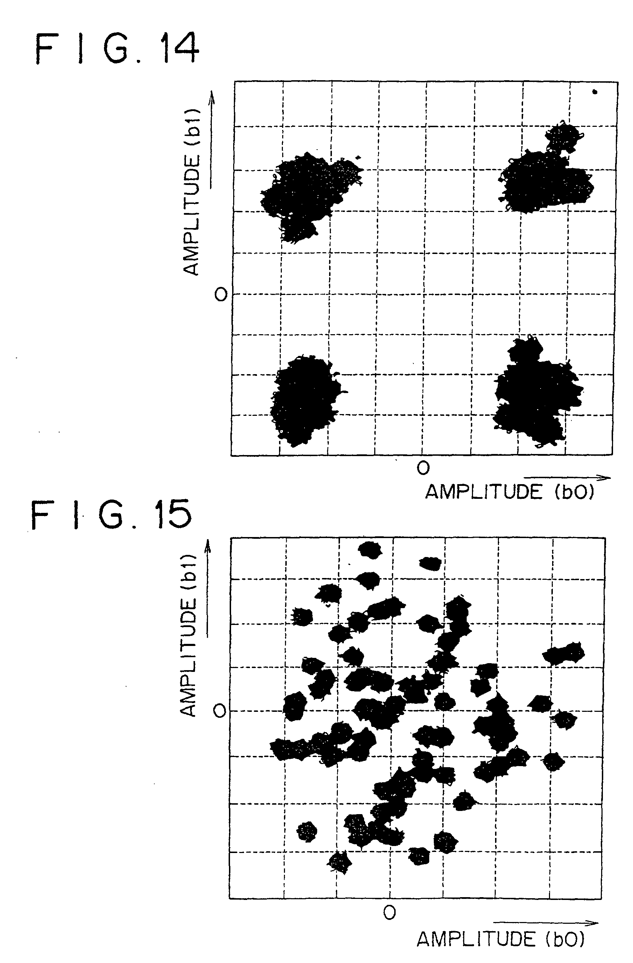

Fig. 14 is a characteristic curve diagram showing a result of reproduction of the copyright protecting information ED thus recorded. Fig. 14 is a plot obtained by sampling the output signals of the integrating circuits 84B1 and 84B2 corresponding to the sine-wave signal SO and the cosine-wave signal S1 having a frequency f2, respectively, at the timing of the flip-flops 86B1 and 86B2. This characteristic curve diagram indicates that there are sufficient amplitude margins between the bits b0 and bl of the copyright protecting information ED, and therefore the bits b0 and b1 are distinguishable from each other.

On the other hand, Fig. 15 is a result of measurement corresponding to that of Fig. 14, obtained when the reproduced signal HF of the MiniDisc is processed by an expected method of creating pirated disks. Fig. 15 shows that it is difficult to reproduce copyright protecting information ED from an illegal copy of the MiniDisc, and wrong copyright protecting information is reproduced. In addition, it is difficult to perform correct decrypting by using key information KY obtained from such wrong copyright protecting information ED, and therefore it is difficult to appreciate music on the pirated disk.

(3) Effect of embodiment

By recording copyright data in such a manner that a result of reception of returned light obtained by laser beam irradiation represents substantially the same signal waveform as that of a multi-value modulation signal of copyright data, it is possible to protect the interests of copyrighters much more effectively than a conventional method.

Also, application of such recording by means of a multi-value modulation signal to a MiniDisc, or a magneto-optical disk can make it difficult to find recorded copyright data, thereby making it possible to protect the interests of copyrighters even more effectively than a conventional method.

In addition, a modulation magnetic field is generated from a binary result of comparison obtained by comparing the multi-value modulation signal with a predetermined reference value for comparison, and the reference value for comparison is provided by filtering the result of comparison using characteristics that correspond to optical characteristics of the reproducing system. Thus, it is possible to record copyright data in such a manner that the result of reception of returned light reliably represents the same signal waveform as that of the multi-value modulation signal, and thereby it is possible to reliably reproduce the copyright data.

Moreover, generation of a multi-value modulation signal by frequency-multiplexing a plurality of modulation signals of copyright data can make it difficult to obtain copyright information from a reproduced signal. This also makes it possible to protect the interests of copyrighters much more effectively than a conventional method.

Furthermore, the multi-value modulation signal includes a sine-wave signal SA that makes it difficult to recognize changes in the signal waveform resulting from copyright data, thereby making it difficult to find the recorded copyright data and thus making it possible to protect the interests of copyrighters.

Furthermore, a modulation magnetic field is generated for recording copyright data in such a manner that the minimum reverse interval of a magnetic field pattern becomes smaller than the minimum resolution of the optical system at the time of reproduction. This can also make it difficult to find the recorded copyright data and thus make it possible to protect the interests of copyrighters.

Thus, a result of reception of returned light as in the recording system is decoded by multi-value decoding means, and thereby reproduced copyright data is decrypted. Therefore, it is possible to protect the interests of copyrighters.

Moreover, each of sine-wave signals and cosine-wave signals having a plurality of frequencies is multiplied by a reproduced signal and the result is distinguished into two values to detect copyright data. Thus, it is possible to reliably reproduce copyright information that is recorded so as to be difficult to discover, and therefore it is possible to protect the interests of copyrighters.

(4) Other embodiments

The embodiment described above generates amplitude-modulated signals by using three orthogonal sets of reference signals and then adds the amplitude-modulated signals to each other to form a multi-value modulation signal. However, the present invention is not limited to this, and the same effect as that of the embodiment described above can be obtained by generating amplitude-modulated signals using any number of sets of reference signals.

The embodiment described above adds a sine-wave signal SA not used for modulation to generate a modulation signal, thereby making it difficult to detect recorded copyright protecting information, and also makes the sine-wave signal SA serve as a reference in generating reference signals SB to SD at the time of reproduction. However, the present invention is not limited to this, and when practically sufficient, the reference signals SB to SD at the time of reproduction may be generated by using the wobbled line of the groove, for example, as a reference, and addition of the sine-wave signal SA may be omitted.

The embodiment described above adds amplitude-modulated signals having different carrier frequencies to each other, thus frequency-multiplexing modulation signals and thereby generating a multi-value modulation signal. However, the present invention is not limited to this, and various frequency-multiplexing methods, such as multiplexing modulation signals by adding frequency-modulated signals having different carrier frequencies to each other, can be widely applied.

The embodiment described above generates a multi-value modulation signal by frequency-multiplexing modulation signals. However, the present invention is not limited to this, and various methods of generating a multi-value modulation signal may be applied; for example, the modulation of the reference signals S1 to S5 described in the foregoing embodiment may be performed by using multi-value copyright protecting information, or the modulation signal itself may be formed by using a multi-value serial data stream.

The embodiment described above records a medium number, apparatus number information, key information, and a cyclic redundancy check character as copyright information. However, the present invention is not limited to this, and can be widely applied in cases of recording of various copyright data, as for example where any one of these pieces of information is recorded, information on, for example, manufacture of the MiniDisc is added to these pieces of information to be recorded, or only key information for decrypting operation is recorded.

The embodiment described above performs decrypting operation by using key information included in recorded copyright information. However, the present invention is not limited to this, and can be widely applied in cases as for example where decrypting operation is performed by using a combination of key information and other information.

The embodiment described above performs decrypting operation by using copyright information to protect the interests of copyrighters. However, the present invention is not limited to this, and the interests of copyrighters may be protected by stopping the processing of the MiniDisc depending on whether such information is detected or not, for example.

The embodiment described above records copyright data at the first region of the program area. However, the present invention is not limited to this, and the same effect as that of the embodiment described above can be obtained by recording the copyright data at various locations.

The embodiment described above records copyright protecting information by means of a special magneto-optical disk apparatus before recording an audio signal. However, the present invention is not limited to this, and a MiniDisc apparatus itself may be provided with a function for the recording of such information, whereby reproduced copyright information may be recorded by using the number specific to the MiniDisc apparatus.

In the embodiment described above, the present invention is applied to MiniDiscs and MiniDisc apparatus. However, the present invention is not limited to this, and may be widely applied to MOs, which are magneto-optical disks similar to MiniDiscs, compact disks in which data is recorded by using a row of pits, various optical disks such as digital video disks, and optical disk apparatus.

While a preferred embodiment of the present invention has been described using specific terms, such description is for illustrative purposes only, and it is to be understood that changes and variations may be made without departing from the spirit or scope of the following claims.

**Claims**

1. An optical disk apparatus for recording copyright data onto an optical disk on which desired data is recorded by using pits or marks, comprising recording means for recording said copyright data onto said optical disk,

wherein said copyright data is recorded onto said optical disk in such a manner that a result of reception of returned light obtained by irradiating said optical disk with a laser beam represents substantially the same signal waveform as that of a multi-value modulation signal of said copyright data.

2. An optical disk apparatus as claimed in claim 1, wherein said optical disk is a magneto-optical disk;

said recording means comprises laser beam irradiation means for irradiating said magneto-optical disk with a laser beam, and magnetic field modulation means for applying a modulation magnetic field to a point irradiated with the laser beam by said laser beam irradiation means;

said magnetic field modulation means generating said modulation magnetic field according to said copyright data so that said result of reception of returned light represents substantially the same signal waveform as that of a multi-value modulation signal of said copyright data.

3. An optical disk apparatus as claimed in claim 2, wherein said magnetic field modulation means comprises:

modulation means for generating said multi-value modulation signal;

comparison means for sequentially outputting a binary result of comparison obtained by comparing said multi-value modulation signal with a predetermined reference value for comparison; and

a filter for providing said reference value for comparison by filtering said result of comparison using characteristics that correspond to optical characteristics of a reproducing system;

whereby said modulation magnetic field is generated according to said binary result of comparison.

4. An optical disk apparatus as claimed in claim 2, wherein said magnetic field modulation means generates said multi-value modulation signal by frequency-multiplexing a plurality of modulation signals of said copyright data, whereby said modulation magnetic field is generated according to said multi-value modulation signal.

5. An optical disk apparatus as claimed in claim 4, wherein said multi-value modulation signal includes a signal that makes it difficult to recognize change in signal waveform resulting from said copyright data.

**6.** An optical disk apparatus as claimed in claim 2, wherein said magnetic field modulation means generates said modulation magnetic field such that a minimum reverse interval of a magnetic field pattern on said optical disk created by said modulation magnetic field becomes smaller than a minimum resolution of an optical system in reproduction.

**7.** An optical disk apparatus for reproducing desired data recorded on an optical disk by receiving returned light that is obtained by irradiating the optical disk with a laser beam, comprising decoding means for decoding said copyright data recorded on said optical disk,
wherein each value of a multi-value signal is decoded on the basis of a result of reception of returned light, whereby copyright data recorded on said optical disk is decoded.

**8.** An optical disk apparatus as claimed in claim 7, wherein said optical disk is a magneto-optical disk, and said result of reception of returned light is a signal whose signal level changes according to a plane of polarization of said returned light.

**9.** An optical disk apparatus as claimed in claim 7, wherein said decoding means comprises:

reproducing means for generating reproduced data by distinguishing said result of reception of returned light into two values; and
decrypting means for decrypting said reproduced data by using said copyright data.

**10.** An optical disk apparatus as claimed in claim 7, wherein said decoding means comprises:

a plurality of multiplying circuits for multiplying respective sine-wave signals and/or cosine-wave signals of a plurality of frequencies by said result of reception of returned light; and
a plurality of determining circuits for detecting said copyright data by distinguishing each of results of multiplication by said plurality of multiplying circuits into two values.

**11.** An optical disk on which desired data is recorded so as to be reproducible from a result of reception of returned light obtained by laser beam irradiation,
wherein copyright data is recorded in such a manner that said result of reception of returned light represents substantially the same signal waveform as that of a multi-value modulation signal of said copyright data.

**12.** An optical disk as claimed in claim 11, wherein said desired data is encrypted for recording by using said copyright data.

**13.** An optical disk as claimed in claim 11, wherein said desired data and said copyright data are recorded as change in magnetic characteristics of an information-recording surface.

**14.** An optical disk as claimed in claim 13, wherein a minimum unit of change in said magnetic characteristic resulting from the recording of said copyright data is smaller than resolution of an optical system that receives returned light obtained from said laser beam irradiation.

**15.** An optical disk as claimed in claim 11, wherein said multi-value modulation signal is obtained by frequency-multiplexing a plurality of modulation signals of said copyright data, and said multi-value modulation signal includes a signal that makes it difficult to recognize change in signal waveform resulting from said copyright data.

F I G. 1

F I G. 2

# F I G . 3

b0, (b1~b5)　　　　　22　　21A, (21B~21F)　　P0, (P1~P5)

24

0.5

BIAS
GENERATION
CIRCUIT　23

# F I G . 4

SB, (SC, SD)　　　　　　　　　　　S0, (S2, S4)

30

32

31

26B, (26C, 26D)

# F I G . 5

SB, (SC, SD)　　　　　　　　　　　S1, (S3, S5)

33

35

34

27B, (27C, 27D)

# F I G. 6

# FIG. 7

EP 1 132 906 A2

# F I G. 8A

# F I G. 8B

F I G. 9A

F I G. 9B

F I G. 9C

F I G. 9D

F I G. 9E

EP 1 132 906 A2

# F I G. 10A

2

# F I G. 10B

| LEAD-IN | | PROGRAM AREA | LEAD-OUT |
|---|---|---|---|

# F I G. 10C

| ED | ED | ED |
|---|---|---|

# F I G. 10D

| SYNC | MEDIUM NUMBER | APPARATUS NUMBER INFORMATION | KEY INFORMATION | CRC |
|---|---|---|---|---|

SB          SN          KY

21

# F I G. 11

EP 1 132 906 A2

# FIG. 12

EP 1 132 906 A2

# F I G. 13

# F I G. 14

# F I G. 15